# EUROPEAN PATENT APPLICATION

(11) **EP 2 546 584 A1**
(43) Date of publication of application: **16.01.2013**
(21) Application number: 11174063.5
(22) Date of filing: 14.07.2011
(51) Int. Cl.: F24J 2/52, H01L 31/042, H01L 31/048

(54) **System for fastening at least one photovoltaic panel to a roof of tiles or slates**

(71) Applicant: Marchegay S.A., 85400 Lucon (FR); EDF ENR SOLARE S.r.l., Cuneo (IT)
(72) Inventor: Lelaure, Anthony, 85320 CORPE (FR); Bonhommeau, Hervé, 85670 SAINT-CHRISTOPHE DU LIGNERON (FR)
(74) Representative: Jorio, Paolo

(57) **Abstract**

The present invention concerns a system (1) for fastening at least one photovoltaic panel (2) onto a roof (T) of tiles or slates (A) mounted on a structure comprising rafters (C) and battens (L), the system including:
- at least one photovoltaic panel (2),
- at least two rails (3) adapted to be disposed substantially parallel to the rafters (C) and configured to hold said at least one photovoltaic panel (2) on the structure, two adjacent rails separating two adjacent photovoltaic panels (2),
- at least two traverses (5) disposed parallel to the battens (L) and substantially perpendicular to the rails (3) and separating adjacent photovoltaic panels (2),
the fastening system being fastened to the structure at a zone (Z) devoid of tiles or slates (A), the system being characterized in that it includes at least one support rod (20) adapted to be disposed substantially parallel to the battens (L) and to be fastened to at least one rafter (C), and configured to support said at least two rails (3), said rod (20) having positioning means (22) for each rail (3), said positioning means including at least two projecting members (34) which delimit an acommodating space (35) between them for a rail.

## Description

### 1. Field of the invention

The invention concerns the field of the design, the manufacture and the mounting of covering surfaces including photovoltaic panels or modules for the production of electricity from solar energy. More particularly, the invention concerns the systems for fastening photovoltaic panels on covering surfaces such as roofs, in particular roofs of tiles or slates, for example already existing domestic roofs or those yet to be built, resting on structures including rafters and battens.

In certain countries such as France, the systems for fastening photovoltaic panels are profitable through selling on the electricity produced if they are integrated, that is to say if they satisfy the criteria for integration into the roof defined by public bodies or on the contrary are less profitable if they are not integrated in accordance with those same criteria.

### 2. Prior art solutions

Systems for fastening photovoltaic panels onto a roof are known which require measurements to be taken *in situ* to correctly dispose the members of the fastening system, which tends to increase the installation time.

Systems for fastening photovoltaic panels are known for industrial buildings or large roofing surfaces. The problematics for industrial or agricultural roofs are not quite the same as those for domestic roofs.

Systems for fastening photovoltaic panels onto a roof are known which require an existing roofing structure to be corrected if it is deformed, which obliges the operator to add wood that is cut to measure to make up for the deformations in the structure, when performing the mounting.

Systems for fastening photovoltaic panels onto a roof are also known which require a rather long mounting time, in particular to adapt the different members of the mounting to the configuration of the roof, in particular to ensure the sealing of the junction between the fastening system and the roof.

Systems for fastening photovoltaic panels onto a roof shall also resist heavy loads of snow and wind so that they can be installed in high altitude. Systems for fastening photovoltaic panels onto a roof shall also be designed to be water proof and guarantee a mechanical strength.

Systems for fastening photovoltaic panels onto a roof shall also be designed to have an heat transmittance similar to the substituted portion of roof.

### 3. Objects of the invention

An object of the invention is thus in particular to mitigate all or part of these drawbacks of the prior art.

More particularly, an object of the invention is to provide a system for fastening at least one photovoltaic panel onto a domestic roof comprising slates or tiles, resting on a frame including rafters and battens, whether already existing or in course of construction.

Another object of the invention is to provide a system for fastening at least one photovoltaic panel onto a roof of tiles or slates which is easy and quick to mount for an operator.

Another object of the invention is to provide a system for fastening at least one photovoltaic panel onto a roof which is modular and easily adaptable to the roof and to its structure at the time of mounting.

Another object of the invention is to provide a system for fastening at least one photovoltaic panel making it possible to avoid taking a large number of measurements at the time of mounting.

Another object of the invention is to mount such a system for fastening at least one photovoltaic panel that is reliable, safe and which satisfies the integration criteria.

Another object of the invention is to mount such a system for fastening at least one photovoltaic panel so that it resists to heavy load of snow and wind.

### 4. Presentation of the invention

The invention meets all or part of these objects by virtue of a system for fastening at least one photovoltaic panel onto a roof of tiles or slates mounted on a structure comprising rafters and battens, the system including:
- at least one photovoltaic panel,
- at least two rails adapted to be disposed substantially parallel to the rafters and configured to hold said at least one photovoltaic panel on the structure.

According to the invention, the fastening system includes at least one support rod adapted to be disposed substantially parallel to the battens and to be fastened to at least one rafter, and configured to support said at least two rails, said rod having positioning means for each rail.

By virtue of the invention, using the rod, it is easy on mounting to locate the positioning of the rails. In particular, it is no longer necessary, as with the systems of the prior art, to measure the space between the two rails which retain the photovoltaic panels. It is thus possible to reduce the installation time of the system.

The positioning means may include at least two projecting members which delimit an accommodation space between them for a rail.

The fastening system may comprise at least one shim adapted to be received in the positioning means. In this case, said at least one shim may include a substantially flat part and two lugs adapted to come to bear against the two projecting members of the rod.

By virtue of the possibility of disposing at least one shim in particular between the rod and the rail, it is possible to make up for a deformed structure without having to add wood or to produce a system of shims made to measure.

The support rod may be configured to impose a predetermined spacing between said at least two rails.

The support rod may include at least one aperture formed over at least part of its length.

The aperture may enable the fastening points and/or the mounting points of the rod to be located relative to the structure. The rod is fastened through the battens to the rafters of the structure which usually have a greater diameter than the battens and therefore form a stronger anchorage point.

The support rod may have at least one bearing surface configured to receive the rail. That bearing surface is for example formed in the vicinity of the positioning means or includes the positioning means. That bearing surface may be configured to receive the rail directly or indirectly. In the latter case, shims are for example interposed between the bearing surface and the rail.

The bearing surface may be made in one piece with the support rod.

Alternatively, the bearing surface may form a separate part from the support rod, for example being formed on a fastening piece including the bearing surface and adapted to be fastened to a rafter in a manner joined to the rod. In this case, the fastening piece may, over at least a part of its length, have a U-shaped cross-section forming a channel for receiving a rod.

The rod may include at least one rod section, or even at least two rod sections, each section having two ends, said ends being formed to be complementary with each other, so as to enable two adjacent rod sections to be joined.

By virtue of this aspect of the invention, a rod section may include positioning means for a rail and the number of rod sections may depend on the area of roof covered by photovoltaic panels. Thanks to those adapted end forms, the rod sections may be assembled together like a puzzle, to form a rod.

The fastening system may, in addition to the members described above, include at least some of the following members: a rain shield adapted to be disposed under the rod, a seal-forming bituminous strip and/or lower metal sheet, side, upper and lower metal flashing sheets, transverse rails or cross members adapted to be disposed between two photovoltaic panels extending one above the other according to the slope of the roof.

### 5. List of the drawings

Other features and advantages of the invention will appear more clearly on reading the following description of embodiments of the invention, which are given as illustrative and non-limiting examples, and of the accompanying drawings in which:
- Figure 1 is a diagram in perspective of a fastening system in accordance with the invention implemented on a roof,
- Figures 2 to 11 are diagrams in perspective of the roof of Figure 1 during the putting in place of the various members of the fastening system, Figure 12 is a diagram in perspective of a first example of a section of support rod in accordance with the invention, shown in isolation,
- Figure 13 is a diagram in perspective of a fastening piece, shown in isolation, which is adapted to be fastened with the rod of Figure 12,
- Figure 14 is a partial diagrammatic representation in perspective of the fastening piece of Figure 13 joined onto the rod section of Figure 12, and the addition of shims,
- Figure 15 is a diagrammatic cross-section view on XV-XV of figure 14,
- Figure 16 is a diagram in perspective of a second example of a section of support rod in accordance with the invention, shown in isolation,
- Figure 17 is a partial diagrammatic representation in perspective of two rod sections similar to that of Figure 16, assembled together,
- Figure 18 is a partial diagrammatic representation in perspective of the rod section of Figure 16, in course of receiving two shims,
- Figure 19 is a partial diagrammatic exploded view of the assembly of the rod section of Figure 16, with shims and a rail,
- Figure 20 is a diagrammatic partial representation in perspective of the junction zone of the fastening system with the roof, on the side, and
- Figures 21 to 25 are diagrams of different possibilities for assembly of photovoltaic panels in the fastening system in accordance with the invention
- Figure 26 is an enlarged view of a portion of a diagram representation in perspective of the roof of Figure 1 in a particularly preferred embodiment.
- Figure 27 is a diagrammatic cross-section view on XXVII- XXVII of figure 26.

### 6. Detailed description of embodiments of the invention

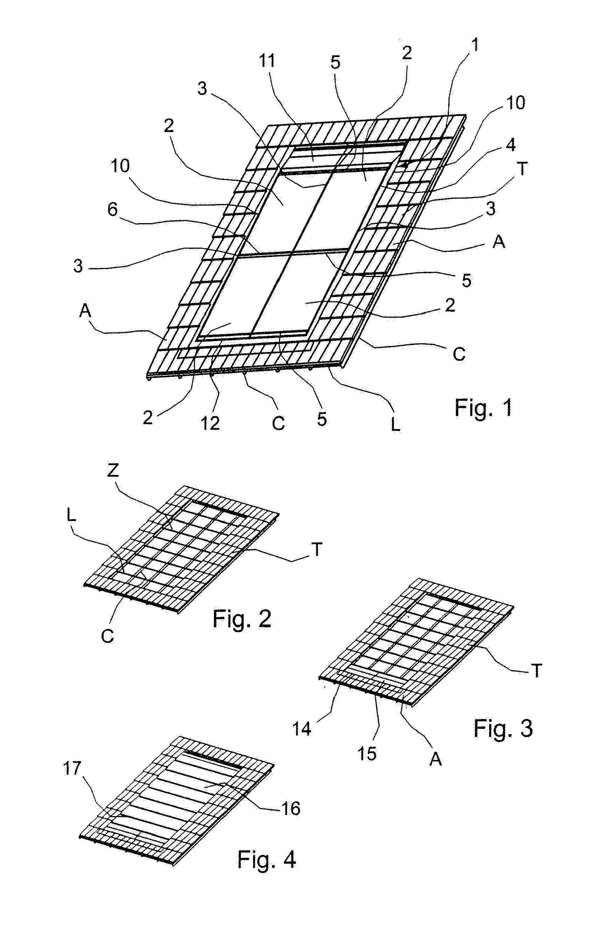

In Figure 1 a roof T is shown which, in the illustrated example, is formed from slates or tiles A. The roof T rests on a structure of metal or wood including rafters C extending along the slope of the roof T and substantially horizontal battens L, disposed substantially perpendicular to the rafters. The roof T in this example is a domestic roof.

As can be seen in Figure 1, part of the roof T is occupied by a fastening system 1 for photovoltaic panels 2 mounted on the roof T.

In the illustrated example, the fastening system 1 includes four photovoltaic panels 2, but the number of photovoltaic panels 2 may be less than or greater than four without departing from the scope of the invention. The positioning of the photovoltaic panels 2 may be different, i.e. different from a positioning as illustrated in Figure 1 in "portrait format", without departing from the scope of the invention either.

The different members of the fastening system 1 that are visible in Figure 1 are the following.

The fastening system 1 includes, in addition to the photovoltaic panels 2, at least two rails 3 disposed substantially parallel to the rafters C, which are configured to support and hold the photovoltaic panels 2 on the structure. In the illustrated example, the rails 3 form the support for the photovoltaic panels 2 and a cover 4 parallel to the rails 3 is disposed above the photovoltaic panels 2 so as to hold them in particular by pinching with the rail 3. In the illustrated example, there are three rails 3 but there may be a larger or smaller number without departing from the scope of the invention, depending on the number of photovoltaic panels 2 of the fastening system.

The fastening system 1 further includes a plurality of traverses 5, the number of which is six in the illustrated example, i.e. three sets of two traverses separated by a rail 3 extending in line with each other, and which are disposed parallel to the battens L, substantially perpendicular to the rails 3 and separating two adjacent photovoltaic panels 2 between them, in the direction of the slope or bordering below or above the photovoltaic panels 2 situated on the edge of the fastening system. The traverses 5 are, as for the rails 3, disposed under the photovoltaic panels 2 whereas a cover 6 is mounted on top so as to hold the photovoltaic panels in particular by pinching between the cover 6 and the traverse 5.

The fastening system 1 further includes members for joining with the roof T providing sealing thereof in the zone adjacent the photovoltaic panels 2.

In particular, the fastening system 1 laterally includes side metal flashing sheets 10, in the upper part an upper metal flashing sheet 11 and in the lower part a lower metal flashing sheet 12.

Other members of the fastening system 1 are not visible in Figure 1 and will be described below.

Figures 2 to 11 diagrammatically illustrate the different steps of mounting the fastening system 1 for photovoltaic panels 2 in accordance with the invention.

Figure 2 shows a roof T resting on a wood or metal structure T formed from rafters C and from battens L. The roof T has been partially uncovered or has not been fully covered so as to leave apparent a zone Z of the structure to leave space for the mounting of the fastening system 1.

In Figure 3 there has also been shown the step of putting in place a sheet of metal 15 for joining with the tiles or slates A. This sheet of metal 15 extends over the whole width of the uncovered zone Z, at the bottom of the slope, being disposed parallel to the battens L. A bituminous strip 14 is also put in place, substantially covering the sheet of metal 15.

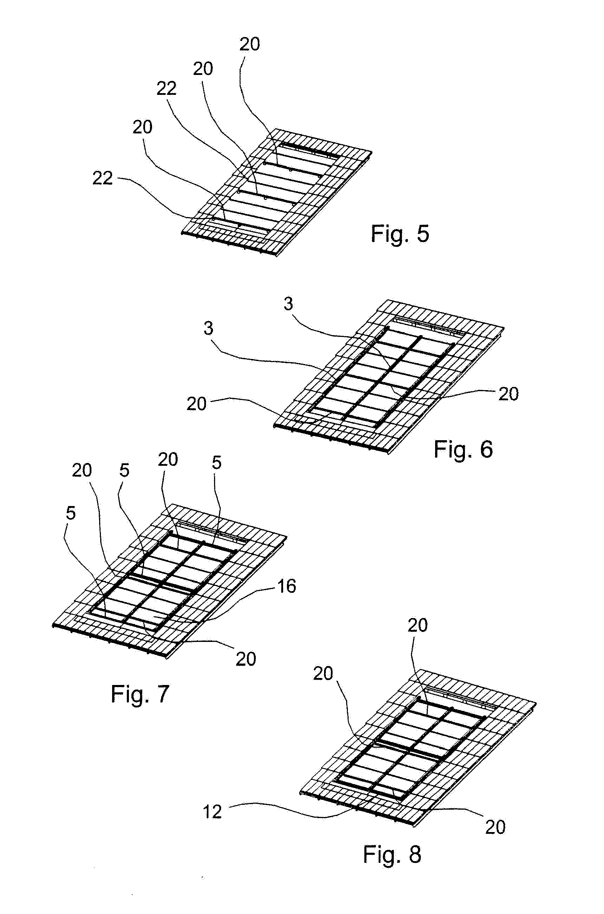

Figure 4 illustrates the placing, over practically the whole of the zone Z, of a rain shield 16 on which it is possible, for example by marking out, to locate the battens and/or rafters of the structure by forming lines 17 so as to position support rods 20, in a step illustrated in Figure 5, parallel to and along those battens L, there being three of them in the illustrated example. Each support rod 20 is, on mounting, fastened to at least one rafter C and configured to support at least two rails 3.

According to the principle of the invention, each support rod 20 has positioning means 22 for each rail 3.

The rods 20 will be described in detail below.

Figure 6 illustrates the placing of the rails 3 on the rods. The spacing between the rails 3 is imposed by the rods 20. In this illustrated example, the spacing is of a length equal to that of a rod section 30. More particularly, the spacing matches the distance between two positioning means 22, a rod section 30 including in this example positioning means 22 for a rail 3.

The traverses 5 are then placed on the rails 3 in a step illustrated in Figure 7.

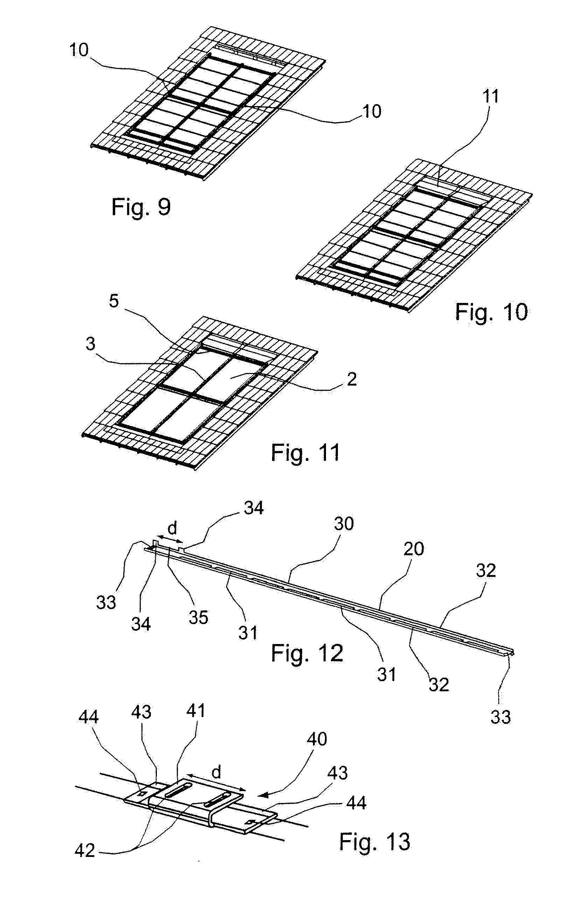

As illustrated in Figure 8, at least one lower metal flashing sheet 12 is put in place then, in a step illustrated in Figure 9, at least one side metal flashing sheet 10 is put in place, before putting in place, as illustrated in Figure 10, at least one upper metal flashing sheet 11.

In a step illustrated in Figure 11, the photovoltaic panels 2 are put in place bordered by the rails 3 and the traverses 5.

The covers 4 and 6 are then put on the rails 3 and traverses 5 respectively, in a step not illustrated, to terminate the installation of the fastening system 1 on the roof T.

Figures 12 to 19 illustrate two examples of support rods 20 capable of forming part of the fastening system 1.

A first example of a support rod 20 is illustrated in Figures 12 to 15.

The support rod 20 includes at least one rod section 30 illustrated in isolation in Figure 12, taking the form of a bar pierced with apertures 31 along the section 30. Each rod 20, which extends over a segment of substantially the width of the area of roof to cover by the photovoltaic panel or panels 2, may include one or more rod sections 30. The section 30 includes raised lateral edges to form a rim 32 over the whole length of the section 30. The ends 33 of the section 30 of the rod 20 have forms that are complementary with each other, so as to be able to assemble two sections 30 in line with each other. Section 30 includes positioning means 22 formed, in the illustrated example, by two projecting members 34, separated by a space 35 of a length d substantially equal to the width of the rail 3. Thus, the rail 3 may be positioned in that space 35 between the projecting members 34 formed, in this illustrated example, in one piece with the rod section 30. The apertures 31 enable location of the marking, in particular the lines 17, traced out on the rain shield 16, so as to fasten the rod 20 on the rafters C of the structure. A rod section 30 may include positioning means one or more rails 3.

A fastening piece 40 has been illustrated in Figure 13. This fastening piece 40 is adapted to be coupled to the rod section 30 of Figure 12 and to be joined to the rafters C and battens L via the rod. This fastening piece 40 takes the form of a U forming a channel within the U for receiving the rod 20, over a part of its length. The dorsal part of the U extends to form two lateral wings 43.

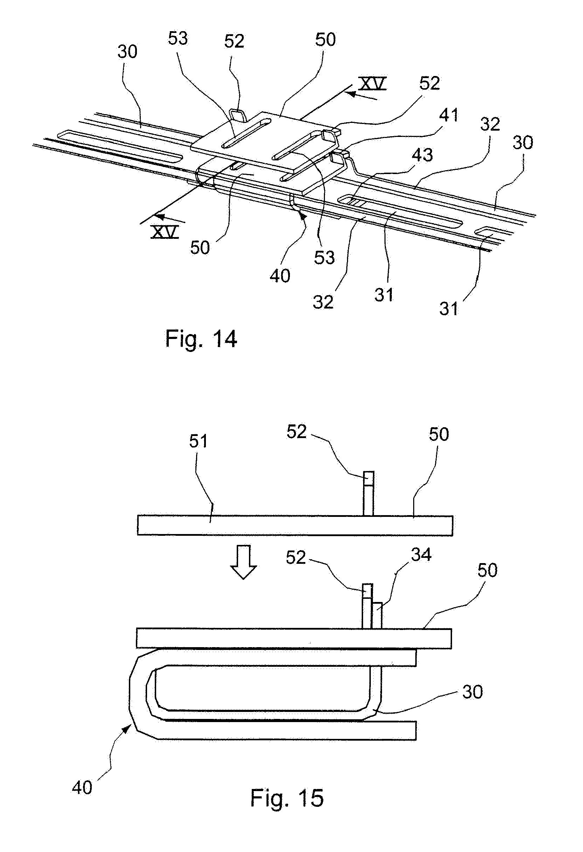

The fastening piece 40 includes a bearing surface 41, configured to receive the rail 3. In the illustrated example, the bearing surface 41 extends over a length substantially equal to the length d, so as to be able to occupy the space 35 between the projecting members 34 of the rod 20 as can be seen in Figure 14.

The bearing surface 41 is, in the illustrated example, pierced with apertures 42 enabling a fastening screw for example to be inserted therein.

Two openings 44 are also provided in the wings 43 of the fastening piece 40 so as to enable the rod 20 and the fastening piece 40 to be joined.

In Figures 14 and 15, the joining of the fastening piece 40 with the rod 20 is illustrated. In these Figures, the putting in place of the shims 50 can be seen, of which there are two in the illustrated example, which may be employed, in the fastening system 1 in accordance with the invention, so as to make up for possible deformation of the structure before positioning the rails 3. Each shim 50 is adapted to be received partially in the positioning means 22 as illustrated. Each shim 50 includes a substantially flat part 51 and lugs 52, of which there are two in the illustrated example, adapted to come to bear against the projecting members 34 of the rod 20 and to center the rail 3.

As can be seen, each shim 50 has longitudinal apertures 53, of which there are two in the illustrated example, coinciding with the apertures 42 of the fastening piece 40, so as to receive fastening means such as a screw, for example.

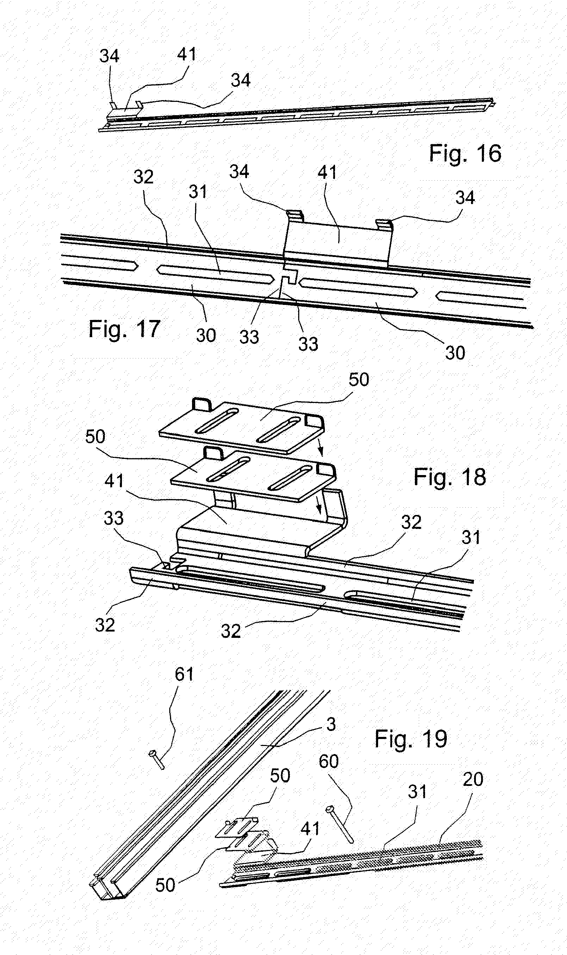

A second example of a support rod 20 of the fastening system 1 is illustrated in Figures 16 to 19.

In this embodiment, the bearing surface 41 is formed in a single piece with the support rod 20, forming a shelf adjacent to the bar and elevated relative to the rim 32 of the rod 20 and linked thereto. The bearing surface 41 is bordered by the projecting members 34 and is adapted to receive the shims 50 similar to those described in Figures 14 and 15.

As can be seen in Figure 17, two rod sections 30 are nestingly fitted using their ends 33 which are formed in complementary manner to enable assembly in the manner of a puzzle.

Figure 19 illustrates the joining of the rod 20 with a rail 3 and fastening means constituted by screws 60 and 61. The screw 61 is adapted to assemble the rail 3 with the shims 50 and the bearing surface 41 whereas the screw 60 is adapted to join the rail 3 with a rafter C through the apertures 31. It is to be noted that, in this second example, the bearing surface 41 does not include any aperture.

The screws 60 and/or 61 may be self-drilling or self-boring.

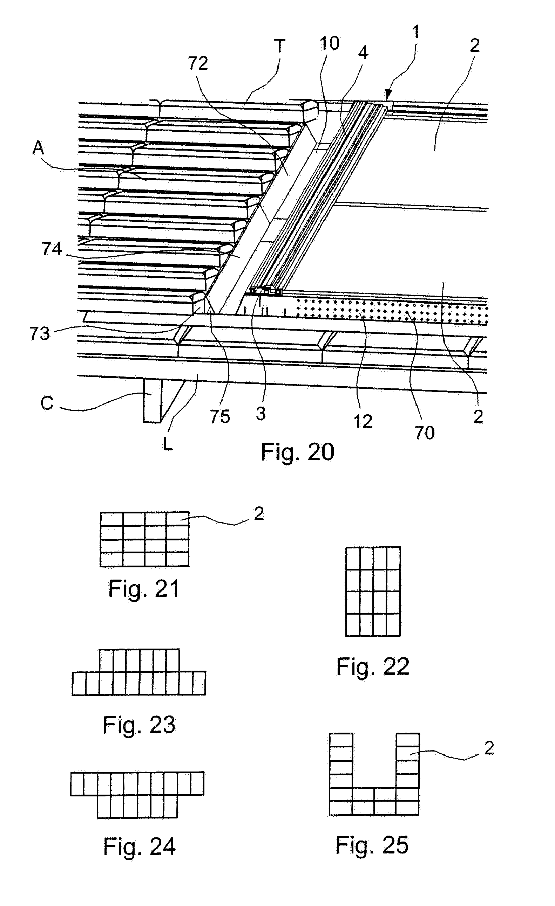

Figure 20 partially represents the fastening system 1 once put into place on the roof T. In this Figure, a cap 4 cooperating with the rail 3 can be seen as well as the edge of a photovoltaic panel 2. The side metal flashing sheet 10 and the lower metal flashing sheet 12 can be also seen comprising a plurality of vents 70 enabling air to flow under the photovoltaic panels 2.

The lateral link between the photovoltaic panels 2 and the tiles or slates A is provided by the side metal flashing sheet 10. The lateral link is also provided by an obstructing member 72 adapted to extend at the edge of the tiles A parallel to the rafters C to avoid water infiltration under the tiles A on account of the superposition of the tiles A along the slope of the roof T. In the illustrated example, the obstructing member 72 is movably mounted relative to the side metal flashing sheet 10 in a direction substantially perpendicular to that of the rafters C and thus in a direction substantially parallel to that of the battens L. In the illustrated example, the obstructing member 72 comprises a base 73 represented in dashed line in Figure 20 extending under the tiles A. From this base 73 extends a projecting elongate member 74 formed in this example by a fold having an inverted V-section of a height at least equal to the gap formed by two adjacent tiles A along the slope of the roof T.

The obstructing member 72 is formed from a strip of sheet metal, in this example.

Also in this example, the side metal flashing sheet 10 comprises a substantially flat part 75 of which one end is adapted to extend under the tiles A. The substantially flat base 73 of the obstructing member 72 extends between the substantially flat part of the side metal flashing sheet 10 and the tiles A. The base 73 is arranged to be able to slide on the substantially flat part 75 of the side metal flashing sheet 10 to enable the operator to adjust the position of the obstructing member 72 and thus to effectively obturate the gap formed between the tiles A.

This system enables easy mounting that cannot be envisioned in the systems of the prior art in which the obstructing member is formed in one piece with the side metal flashing sheet, which does not enable it to be adjusted to the roof.

This system also provides a mechanical strength and an heat transmittance comparable to the substituted portion of roof.

Moreover this system is waterproofing as the substituted portion of roof.

In Figures 21 to 25 different configurations which may be adopted by the fastening system 1 in accordance with the invention have been represented. In Figure 21, it can be seen that the photovoltaic panels 2 may be assembled on the roof T in a "landscape" rectangular format. In Figure 22, the photovoltaic panels are arranged in a "portrait" rectangular format. In Figures 23 and 24, photovoltaic panels 2 can be seen which are arranged in a T-shape, respectively upright and inverted, and in Figure 25 in a U-shape.

Other configurations may of course be envisioned, depending on the roof T, for example.

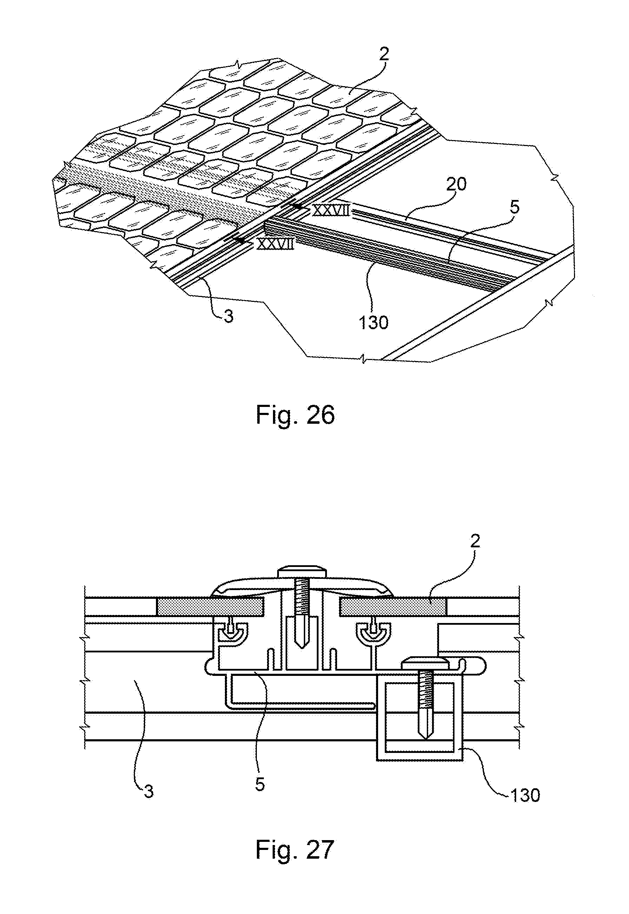

As can be seen in the section of Figure 26 in a further preferred embodiment to limit a possible flexing of the traverse 5, at least a reinforcing bar 130 is optionally added to the traverse 5.

The reinforcing bar 130 may be added to some or all the traverses 5 of the system according to the need.

The reinforcing bar 130 is preferably made of aluminum to avoid an increase of weight while assuring a low flexibility and is preferably square in section.

The reinforcing bar 130 is preferably fixed under the traverse 5 and more preferably screwed. The screws may be self-drilling or self-boring. Even more preferably two or four screws are used.

This optional but preferred embodiment allow the system to resist to heavier load of snow and wind as requested by the regulations of certain countries.

Therefore the system can be installed also at higher altitude than the previously known systems.

The system 1 can also alternatively or additionally comprise an increased number of rods 20 for the rail 3 to limit a possible flexing of the rail 3.

The invention is of course not limited to the examples which have just been described.

For example each rod section 30 may include positioning means for one rail or several rails 3. A rod 20 which extends over a segment of substantially the width of the area of covering to cover with photovoltaic panels, may include one or more rod sections.

In the whole of the description, the expressions "including a" or "comprising a" must be understood as being synonyms respectively of the expressions "including at least one" and "comprising at least one" unless the contrary is specified.

The ranges of values stated are comprised as inclusive of the limits, unless the contrary is specified.

## Claims

1. A system (1) for fastening at least one photovoltaic panel (2) onto a roof (T) of tiles or slates (A) mounted on a structure comprising rafters (C) and battens (L), the system including:
- at least one photovoltaic panel (2),
- at least two rails (3) adapted to be disposed substantially parallel to the rafters (C) and configured to hold said at least one photovoltaic panel (2) on the structure, two adjacent rails separating two adjacent photovoltaic panels (2),
- at least two traverses (5) disposed parallel to the battens (L) and substantially perpendicular to the rails (3) and separating adjacent photovoltaic panels (2),
the fastening system being fastened to the structure at a zone (Z) devoid of tiles or slates (A),
the fastening system being **characterized in that** it includes at least one support rod (20) adapted to be disposed substantially parallel to the battens (L) and to be fastened to at least one rafter (C), and configured to support said at least two rails (3), said rod (20) having positioning means (22) for each rail (3).

2. A fastening system according to claim 1, **characterized in that** said positioning means (22) include at least two projecting members (34) which delimit an accommodation space (35) between them for a rail (3).

3. A fastening system according to one of claims 1 to 2, **characterized in that** it comprises at least one shim (50) adapted to be received in said positioning means (22).

4. A fastening system according to claims 2 and 3, **characterized in that** said at least one shim (50) includes a substantially flat part (51) and two lugs (52) adapted to come to bear against the two projecting members (34) of said rod (20).

5. A fastening system according to any one of the preceding claims, **characterized in that** the support rod (20) is configured to impose a predetermined spacing between said at least two rails (3).

6. A fastening system according to any one of the preceding claims, **characterized in that** the support rod (20) includes at least one aperture (31) formed over at least part of its length.

7. A fastening system according to any one of the preceding claims, **characterized in that** the support rod (20) has at least one bearing surface (41) configured to receive said rail (3).

8. A fastening system according to the preceding claim, **characterized in that** said bearing surface (41) is made in one piece with the support rod (20).

9. A fastening system according to claim 7, **characterized in that** said bearing surface (41) forms a separate part from the support rod (20), being formed on a fastening piece (40) including the bearing surface (41) and adapted to be fastened to a rafter (C) in a manner joined to the rod (20).

10. A fastening system according to claim 9, **characterized in that** said fastening piece (40) has, over at least a part of its length, a U-shaped cross-section forming a channel for receiving a rod (20).

11. A fastening system according to any one of the preceding claims, **characterized in that** the rod (20) includes at least one rod section (30), or even at least two rod sections (30), each section having two ends (33), said ends (33) being formed to be complementary with each other, so as to enable two adjacent rod sections (30) to be joined.

12. A fastening system according to any one of the preceding claims, **characterized in that** it comprises at least a reinforcing bar (130) fixed to at least a traverse (5)

13. A fastening system according to claim 12, **characterized in that** said reinforcing bar (130) is an aluminum bar.
